**Europäisches Patentamt**

(19) **European Patent Office**

**Office européen des brevets**

(11) Publication number : **0 325 951 B1**

(12) **EUROPEAN PATENT SPECIFICATION**

(45) Date of publication of patent specification :
22.07.92 Bulletin 92/30

(51) Int. Cl.⁵ : **F16D 1/06, F04D 29/20**

(21) Application number : **89100430.1**

(22) Date of filing : **11.01.89**

(54) **Device for centering a drive shaft on a hub.**

(30) Priority : **29.01.88 US 150019**

(43) Date of publication of application :
**02.08.89 Bulletin 89/31**

(45) Publication of the grant of the patent :
**22.07.92 Bulletin 92/30**

(84) Designated Contracting States :
**DE FR GB IT SE**

(56) References cited :
**EP-A- 0 070 265**
**NL-C- 29 554**
**US-A- 1 566 272**

(73) Proprietor : **Matthews, David**
**1510 Greenbrier**
**Green Oaks Illinois 60048 (US)**

(72) Inventor : **Matthews, David**
**1510 Greenbrier**
**Green Oaks Illinois 60048 (US)**

(74) Representative : **Goddar, Heinz J., Dr. et al**
**FORRESTER & BOEHMERT**
**Franz-Joseph-Strasse 38**
**W-8000 München 40 (DE)**

## Description

This invention relates to the art of concentrically mounting thin wall hubs of driven members on drive shafts and specifically deals with the provision of shaft embracing embossments on a thin wall shaft receiving hub concentric with the hub axis to center the hub on the shaft regardless of clearances between the shaft and the shaft receiving aperture of the hub.

Heretofore mounting of thin wall fan blade hubs on drive shafts frequently presented a balancing problem brought about by eccentric misalignment of the blade hub axis and the drive shaft axis. In such installations the shaft has an end face or annular shoulder receiving the hub and a reduced diameter threaded stud portion projecting through a central aperture in the hub. A nut is then threaded on the stud portion to drivingly clamp the hub to the shaft. Such installations require clearance between the shaft and hub aperture permitting misalignment of the axis of the shaft and the axial center of the hub. In an attempt to minimize such misalignment the hubs were made sufficiently thick to accommodate a well receiving the shaft. Such installations were heavy and costly.

It would therefore be an improvement in this art to prevent misalignment of hubs on shafts without requiring massive thick hubs and it would especially be an improvement in this art to provide fan blade units with thin wall central hubs having raised shaft embracing rim portions lying in a circle centered on the axis of the fan blade unit around the shaft receiving aperture.

It would be a still further improvement in this art to emboss raised shaft embracing portions on thin wall hubs of fan blade units or the like to center the unit on the end of a drive shaft without increasing the thickness of the hub.

U.S. Patent 1,566,272 discloses a fan arrangement for sewing machines in which a thin plate or spider having fan blades formed integrally therewith is riveted to a flat circular hub plate stamped from sheet metal. Struck from the edges of the hub plate, are clips having hook shaped ends that are clipped over the head of a nut in diametrical contact to provide a readily attachable and detachable fan for sewing machine.

European published application 0 070 265 shows a gear wheel shaft assembly having a guide portion of smaller radius than the shaft bearing so that a small diameter gear wheel may be mounted on a large diameter shaft.

Netherlands Patent 29554 shows a semi-toriodal spring washer between a nut and a gear ring on a shaft.

According to the invention the hub portions of thin wall units such as fan blades are provided with means for centering the hub on a shaft without increasing the wall thickness of the unit. This is accomplished by providing a thin wall hub portion of the unit with a central shaft receiving aperture surrounded by shaft embracing embossments lying in a circle centered on the true axis of the unit. These embossments snugly embrace the shaft periphery when the hub is bottomed on a radial shaft shoulder from which projects a reduced diameter threaded stud extending through the hub aperture. Then when a clamping nut is threaded on the stud the axis of the shaft and the true center axis of the unit are exactly aligned. This avoids balancing problems usually encountered in mounting thin wall fan units on drive shafts.

In fan blade units made from stamped metal, the shaft embracing rim can be in the form of embossed beads, dimples, tangs, and the like. In plastic material fan blade units the shaft embracing portions can be molded on the hubs.

A preferred arrangement includes the provision of a second aperture in the hub spaced radially outward from the central shaft receiving aperture for receiving a drive pin or other drive projection on the end of the shaft to couple the shaft with the unit.

## ON THE DRAWINGS

Further features and advantages of the present invention are set forth with particularity in the appended claims. The invention may best be understood by making reference to the following description, taken in conjunction with the accompanying drawings and several figures of which like reference numerals identify identical elements and wherein:

Figure 1 is a side elevational view in partial cross-section of a fan blade unit with a thin wall shaft receiving hub incorporating the present invention;

Figure 2 is a fragmentary front elevational view along the line II-II of Figure 1;

Figure 3 is a cross-sectional view of the hub of Figure 2 taken along line III-III of Figure 2;

Figure 4 is a fragmentary front elevational view of a second embodiment of the hub of the present invention;

Figure 5 is a cross-sectional view of the hub of Figure 4 taken along line V-V of Figure 4;

Figure 6 is a fragmentary front elevational view of a third embodiment of the hub of the present invention; and

Figure 7 is a cross-sectional view of the hub of Figure 6 taken along line VII-VII of Figure 6.

The principles of the present invention are particularly useful in forming a hub construction for a fan blade assembly generally indicated at 10 having a hub 12 with a plurality of circumferentially spaced fan blades 14 radiating around its periphery. The hub 12 has a central aperture 16 and is mounted on a drive shaft 18 by an axially projecting reduced diameter threaded stud portion 20 of the shaft which projects from the distal end face or radial shoulder 18a of the drive shaft 18 and extends freely through the central aperture 16 in the hub 12 so that the hub 12 seats on the distal end 18a. The fan blade assembly 10 is then secured to the drive shaft 18 by a nut 22 which is threaded onto the stud portion 20 to clamp the hub 12 between the distal end 18a and nut 22.

The central aperture 16 of the hub 12 has a diameter slightly larger than the outside diameter of the stud portion 20 of the drive shaft 18 to enable the stud portion 20 to be inserted through the aperture 16 without damaging its threads. Consequently, exact centering of the hub 12 on the drive shaft 18 cannot be achieved by the interaction of the stud portion 20 and the central aperture 16 alone.

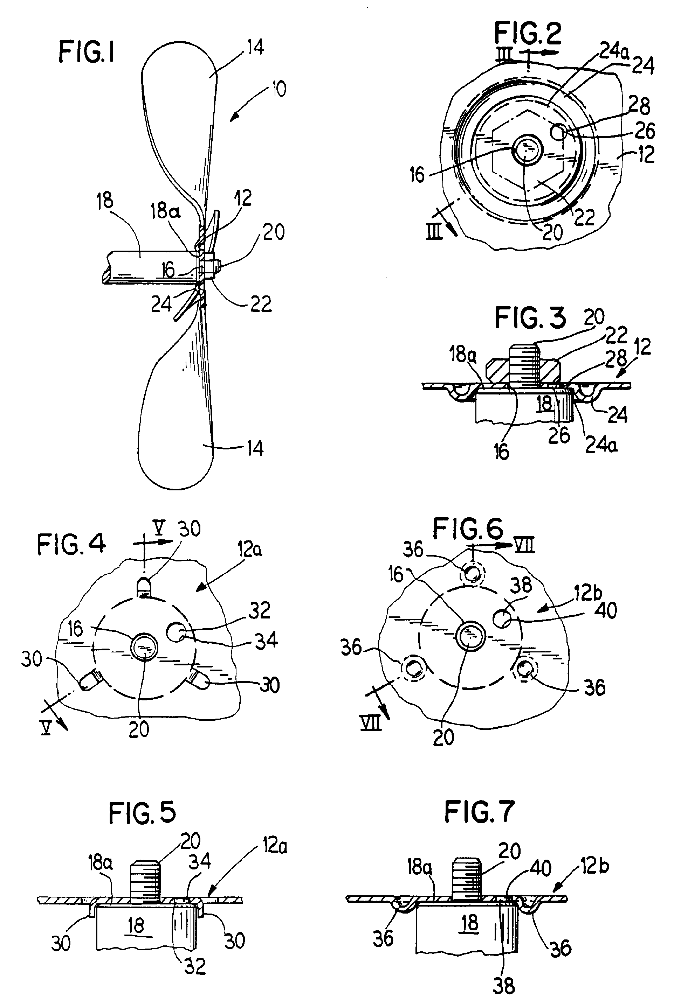

In order to provide centering of the hub 12 on the drive shaft 18, a depending shaft embracing cylindrical bead or rim portion 24 is formed on the shaft engaging face of the hub 12 forming a circular recess 24a as illustrated in the exemplary embodiment of Figures 2 and 3. This rim portion 24 is formed in a circle which is centered with respect to the central axis of the fan blade assembly 10 and extends around the shaft receiving central aperture 16 formed in the hub 12. The inside diameter of the rim portion 24 is chosen to correspond to the outside diameter of the drive shaft 18 so that its distal end 18a may fit snugly within the recess 24a formed by the rim portion 24. As can be discerned from examining Figures 2 and 3, when the threaded stud 20 of the drive shaft 18 is inserted within the aperture 16 of the hub 12, the inside periphery of the rim portion 24 is snugly seated around the outer periphery of the drive shaft 18 which acts as a centering guide and enables the drive shaft 18 to be centrally located with respect to the hub 12.

In order to provide driving of the hub 12 by the drive shaft 18 without completely relying on the clamp fit of the hub 12 between the distal end 18a of the drive shaft 18 and the nut 22, a drive pin or drive projection 26 may be provided on the distal end of the drive shaft 18. This drive pin 26 is spaced radially outward from the central axis of the drive shaft 18 and is received within a second aperture 28 provided in the hub 12. It is to be noted that the drive pin 26 may have a variety of shapes and sizes and, alternatively, the drive pin 26 may project from the hub 12 while the aperture 28 may be located within the distal end 18a of the drive shaft 18 without departing from the teachings of the present invention.

Figures 4 and 5 illustrate another exemplary embodiment of the present invention. In this embodiment, the hub 12a is provided with a plurality of lanced out tangs or tongues 30 lanced from the shaft engaging face of the hub 12a and are spaced radially outward from the central aperture 16. In this exemplary embodiment, three tangs 30 are employed and are arranged in a circle whose diameter corresponds to the diameter of the drive shaft 18 so that its distal end 18a may fit snugly within the tangs 30. Additionally, a drive pin 32 may be included on the distal end 18a of the drive shaft 18 which is received within an aperture 34 within the hub 12a. The drive pin 32 and the aperture 34 are similarly spaced radially outward from the aperture 16 and lie within the circle circumscribed by the tangs 30.

A further modified hub 12b may be provided with a plurality of raised dimples or beads 36 which, like the tangs 30, are similarly spaced radially outward from the aperture 16 of the hub 12b as shown in Figures 6 and 7. In this exemplary embodiment, three dimples or beads 36 are arranged in a circle, similar to the tangs 30 of Figures 4 and 5, whose diameter corresponds to the diameter of the drive shaft 18 so that its distal end 18a may fit snugly between the dimples or beads 36. A drive pin 38 may also be employed in this embodiment which is received within an aperture 40 in the hub 12b.

The embracing rim 24, tangs 30 or dimples or beads 36 snugly embrace the outer periphery of the drive shaft 18 when the hub 12, 12a or 12b is bottomed on the distal end 18a of the shaft 18 and exactly axially align the hub on the shaft 18 to avoid any balancing problems during operation of the fan blade assembly 10. It is to be noted that the present invention may be incorporated in fan blade assemblies 10 constructed of metal having the particular rim 24, tangs 30 or dimples or beads 36 stamped or formed thereon or may alternatively be molded of plastic.

## Claims

1. A method of centering and drivingly connecting the hub (12) of a driven member (10) with a drive shaft (18) having an end face (18a) with a centrally projecting externally threaded stud (20) which comprises: forming an apertured radial wall (12a, 12b) on the hub (12) for receiving the stud (20) therethrough and for bottoming on the end face of the shaft (18), threading a nut (22) on the stud (20) to clamp the wall (12a, 12b) between the end face (18a) of the shaft (18) and the nut (22),
characterized by the steps of
forming shaft embracing portions (24,30,36) as embossments deformed in a thin wall on the face of the hub (12) to be bottomed on the end face (18a) of the shaft (18) to center the true axis of the hub (12) on the shaft (18).

2. The method of claim 1, characterized by the steps of forming a drive pin projection (26) on said end face (18a) of the shaft (18) and providing a pin receiving recess (28) in said wall (12a, 12b) of the hub (12).

3. The method of claim 1, characterized by the step of forming said portions (24,30,36) by deforming an annular bead (24) in said wall (12a,12b) of the hub (12) for embracing said shaft (18).

4. The method of claim 1, characterized by the step of forming said portions (24,30,36) by depressing a plurality of circumferentially spaced tongues (30) from said wall (12a) for embracing said shaft (18).

5. The method of claim 1, characterized by the step of forming said portions (24,30,36) by embossing a ring of circumferentially spaced beads (36) on the wall (12b) for embracing the shaft (18).

6. A hub construction for connecting and centering a driven member (10) on the end of a drive shaft (18) having an end face (18a) with a reduced diameter externally threaded stud (20), a hub (12) having an apertured wall (12a,12b) for receiving said stud (20) therethrough and for bottoming on said end face (18a) of the shaft (18), a nut (22) threaded on the stud (20) clamping said wall (12a,12b) to the end face (18a) of the shaft (18),
characterized in that
said wall (12a,12b) having a shaft embracing portion (24,30,36) centered on the hub axis to axially align the hub (12) on the shaft axis, said embracing portion (24, 30, 36) being embossments deformed in said apertured wall (12a, 12b) of said hub (12).

7. The hub construction of claim 6, characterized in that said shaft embracing portion (24,30,36) is an annular bead (24) depressed from said wall (12a,12b) providing a rim surrounding the shaft (18).

8. The hub construction of claim 6, characterized in that said portion (24,30,36) is a plurality of circumferentially spaced projections (36) on the wall (12b) for embracing the shaft (18).

9. The hub construction of claim 6, characterized in that said portion (24,30,36) is a plurality of circumferentially spaced tongues (30) projecting from the wall (12a) for embracing said shaft (18).

10. A fan blade construction for mounting on the end of a drive shaft (18) having a radial end face (18a) with a centrally extending reduced diameter threaded stud (20), a thin wall flat hub (12) having radially extending fan blades (14) around its periphery and a central aperture (16) receiving the stud (20) of the drive shaft (18),
characterized in that
said hub (12) having a shaft embracing section (24,30,36) being embossments deformed in said thin wall flat hub, said embracing section (24,30,36) surrounding the aperture (16) to center the hub (12) on the end face (18a) of the drive shaft (18) and a recess (24a) for receiving a drive pin projection (26) from the end face (18a) of the drive shaft (18).

**Patentansprüche**

1. Verfahren zum Zentrieren und antriebsmäßigen Verbinden der Nabe (12) eines angetriebenen Elements (10) mit einer Antriebswelle (18), die mit einer Endfläche (18a) mit einem zentral vorspringenden, mit einem Außengewinde versehenen Stutzen (20) versehen ist, unter: Formen einer mit einer Ausnehmung versehenen radialen Wandung (12a, 12b) auf der Nabe (12) zum Aufnehmen des Stutzens (20) durch diese und zum Abstützen auf der Endfläche der Welle (18), Aufschrauben einer Mutter (22) auf den Stutzen (22) zum Einklemmen der Wandung (12a, 12b) zwischen der Endfläche (18a) der Welle (18) und der Mutter (22),
gekennzeichnet durch die Schritte
Formen von die Welle umgreifenden Abschnitten (24, 30, 36) als Auspressungen in einer dünnen Wandung auf der Fläche der auf der Endfläche (18a) der Welle (18) abzustützenden Nabe (12) zum Zentrieren der wirklichen Achse der Nabe (12) auf der Welle (18).

2. Verfahren nach Anspruch 1, gekennzeichnet durch Ausformen eines Antriebsstiftvorsprungs (26) auf der Endfläche (18a) der Welle (18) und Vorsehen einer den Stift aufnehmenden Ausnehmung (28) in der Wandung (12a, 12b) der Nabe (12).

3. Verfahren nach Anspruch 1, gekennzeichnet durch Ausformen der Abschnitte (24, 30, 36) durch Deformieren eines Ringwulstes (24) in der Wandung (12a, 12b) der Nabe (12) zum Umschließen der Welle (18).

4. Verfahren nach Anspruch 1, gekennzeichnet durch Ausformen der Abschnitte (24, 30, 36) durch Niederdrücken einer Mehrzahl von auf einem Kreis beabstandeten Zungen (30) von der Wandung (12a) zum Umgreifen der Welle (18).

5. Verfahren nach Anspruch 1, gekennzeichnet durch Ausformen der Abschnitte (24, 30, 36) durch Auspressen eines Rings von auf einem Kreisbogen beabstandeten Wulsten (36) auf der Wandung (12b) zum Umgreifen der Welle (18).

6. Nabenkonstruktion zum Verbindung und Zentrieren eines angetriebenen Elements (10) auf das Ende einer an dem Ende einer mit einem Außengewinde versehenen Stutzen (20) mit geringerem Durchmesser aufweisenden Antriebswelle (18), und einer Nabe (12) mit einer mit einer Ausnehmung versehenen Wandung (12a, 12b) zum Aufnehmen des Stutzens (20) durch diese und zum Abstützen auf der Endfläche (18a) der Welle (18) und mit einer Mutter (22) die auf den Stutzen (20) unter Einklemmen der Wandung (12a, 12b) auf die Endfläche (18a) der Welle (18) aufgeschraubt ist,
dadurch gekennzeichnet, daß
die Wandung (12a, 12b) einen die Welle umgreifenden Abschnitt (24, 30, 36) aufweist, der auf der Nabenachse zentriert ist, um die Nabe (12) axial auf der Wellenachse auszurichten, wobei der umgreifende Abschnitt (24, 30, 36) durch Deformierung der mit einer Ausnehmung versehen Wandung (12a, 12b) der Nabe (12) gebildete Auspressungen ist.

7. Nabenkonstruktion nach Anspruch 6, dadurch gekennzeichnet, daß der die Welle umgreifende Abschnitt (24, 30, 36) ein Ringwulst (24) ist, der von der Wandung (12a, 12b) niedergedrückt ist und eine die Welle (18) umgebende Rippe bildet.

8. Nabenkonstruktion nach Anspruch 6, dadurch gekennzeichnet, daß der Abschnitt (24, 30, 36) aus einer Mehrzahl von auf einem Kreis beabstandeten Vorsprüngen auf der Wandung (12) zum Umgreifen der Welle (18) besteht.

9. Nabenkonstruktion nach Anspruch 6, dadurch gekennzeichnet, daß der Abschnitt (24, 30, 36) aus einer Mehrzahl von auf einem Kreis beabstandeten Zungen (30), die von der Wandung (12a) zum Umgreifen der Welle (18) vorstehen, besteht.

10. Propellerblattkonstruktion zum Befestigen auf dem Ende einer Antriebswelle (18), die eine Endfläche (18a) mit einem sich zentral erstreckenden, mit einem Außengewinde versehenen Stutzen (20) mit reduziertem Durchmesser aufweist, mit einer dünnen Flachwandnabe (12) mit sich um deren Umfang radial erstreckenden Propellerblättern (14) und einer zentralen Ausnehmung (16) zum Aufnehmen des Stutzens (20) der Antriebswelle (18),
dadurch gekennzeichnet daß
die Nabe (12) einen die Welle umgebenden Abschnitt (24, 30, 36) aufweist, der durch Prägedeformation in der dünnen Flachwandnabe ausgebildet ist, wobei die die Öffnung umgreifenden Abschnitte (24, 30, 36) die Nabe (12) auf der Endfläche (18a) der Antriebswelle (18) umgeben und mit einer Ausnehmung (24) zur Aufnahme eines Antriebsstiftvorsprungs (26) von der Endfläche (18) der Antriebswelle (18).

**Revendications**

1. Procédé pour centrer et relier de façon motrice le moyen (12) d'un organe entraîné (10), avec un arbre d'entraînement (18) comportant une face d'extrémité (18a) munie d'un téton fileté (20) faisant saillie centralement, qui comprend : la formation d'une paroi radiale (12a,12b) à ouvertures sur le moyen (12), en vue de recevoir le téton (20) à travers elle et pour venir en butée sur la face d'extrémité de l'arbre (18), le vissage d'un écrou (22) sur le téton (20), pour serrer la paroi (12a,12b) entre la surface d'extrémité (18a) de l'arbre (18) et l'écrou (22), caractérisé par l'étape de
formage de parties d'entourage d'arbre (24,30,36), sous forme de reliefs déformés dans une paroi mince de la face du moyen (12) qui doit venir en butée sur la surface d'extrémité (18a) de l'arbre (18), pour assurer le centrage de l'axe réel du moyen (12) sur l'arbre (18).

2. Procédé selon la revendication 1, caractérisé par les étapes pour former une saillie servant de tige d'entraînement (26), sur ladite face d'extrémité (18a) de l'arbre (18), et ménager une cavité de réception de tige (28) dans la dite paroi (12a,12b) du moyen (12).

3. Procédé selon la revendication 1, caractérisé par l'étape de formation desdites parties (24,30,36), par déformation d'un bord annulaire (24) dans ladite paroi (12a,12b) du moyen (12), afin d'entourer ledit arbre (18).

4. Procédé selon la revendication 1, caractérisé par l'étape de formation desdites parties (24,30,36), par enfoncement d'une pluralité de languettes (30) espacées circonférentiellement, depuis ladite paroi (12a), afin d'entourer ledit arbre (18).

5. Procédé selon la revendication 1, caractérisé par l'étape de formation desdites parties (24,30,36), par emboutissage de bords (36) espacés circonférentiellement, sur la paroi (12b), afin d'entourer ledit arbre (18).

6. Construction de moyeu, pour assurer la liaison et le centrage d'un organe entraîné (10), sur l'extrémité d'un arbre d'entraînement (18) comportant une face d'extrémité (18a) munie d'un téton fileté extérieurement (20) de diamètre réduit, un moyeu (12) comportant une paroi munie d'ouvertures (12a,12b) pour recevoir ledit téton (20) à travers elle et pour venir en butée sur ladite face d'extrémité de l'arbre (18), un écrou (22) vissé sur le téton (20), pour serrer la paroi (12a,12b) sur la surface d'extrémité (18a) de l'arbre (18),
caractérisée en ce que
ladite paroi (12a,12b) présente une partie d'entourage d'arbre (24,30,36) centrée sur l'axe du moyeu afin d'aligner axialement le moyeu (12) sur l'axe de l'arbre, ladite partie d'entourage d'arbre (24,30,36) étant constituée de reliefs obtenus par déformation de ladite paroi munie d'ouvertures (12a,12b) dudit moyeu (12)

7. Construction de moyeu selon la revendication 6, caractérisée en ce que ladite partie d'entourage d'arbre (24,30,36) est un bord annulaire (24) enfoncé depuis ladite paroi (12a,12b) en donnant une bordure qui entoure l'arbre (18).

8. Construction de moyeu selon la revendication 6, caractérisée en ce que ladite partie d'entourage d'arbre (24,30,36) est une pluralité de saillies (36) espacées circonférentiellement, sur la paroi (12b), afin d'entourer l'arbre (18).

9. Construction de moyeu selon la revendication 6, caractérisée en ce que ladite partie d'entourage d'arbre (24,30,36) est une pluralité de languettes (30) espacées circonférentiellement, faisant saillie de la paroi (12a), afin d'entourer ledit arbre (18).

10. Construction de pale de ventilateur, pour effectuer le montage sur l'extrémité d'un arbre d'entraînement (18) comportant une face d'extrémité radiale (18a) avec un téton fileté (20) de diamètre réduit et placé au centre, un moyeu plat (12) à paroi mince et comportant des pales de ventilateur (14) s'étendant radialement autour de sa périphérie et une ouverture centrale (16) qui reçoit le téton (20) de l'arbre d'entraînement (18),

caractérisé en ce que

ledit moyeu (12) comporte une section d'entourage d'arbre (24,30,36) en relief, dont le relief est obtenu par déformation dudit moyeu plat à paroi mince, ladite section d'entourage (24,30,36) entourant l'ouverture (16), afin de centrer le moyeu (12) sur la face d'extrémité (18a) de l'arbre d'entraînement (18) et une cavité (24a) pour recevoir une saillie en forme de tige d'entraînement (26) qui part de la face d'extrémité (18a) de l'arbre d'entraînement (18).

FIG.1

FIG.2

FIG.3

FIG.4

FIG.5

FIG.6

FIG.7